# EUROPÄISCHE PATENTANMELDUNG

(11) **EP 1 371 871 A1**
(43) Veröffentlichungstag der Anmeldung: **17.12.2003**
(21) Anmeldenummer: 02405487.6
(22) Anmeldetag: 12.06.2002
(51) Int. Cl.: F16F 7/02

(54) **Dämpfungselement für die Endlagendämpfung von bewegbaren Massen**

(71) Anmelder: PEKA-METALL AG, 6295 Mosen (CH)
(72) Erfinder: Weber, Peter, 5712 Beinwil am See (CH)
(74) Vertreter: BOVARD AG - Patentanwälte

(57) **Zusammenfassung**

Ein Dämpfungselement (1) für die Endlagendämpfung von bewegbaren Massen, insbesondere von Schrankauszügen, Schubladen und dergleichen von Möbelschränken, umfasst ein Gehäuse (2), ein Stangenelement (10), das in Längsachsenrichtung verschiebbar in diesem Gehäuse gehalten ist, und im Gehäuse untergebrachte Dämpfungsmittel. Das Stangenelement (10) ist gegen Verdrehung gesichert im Gehäuse (2) geführt und mit einem Gewinde (16) versehen, auf welches ein Schraubenmutterelement (17) aufgesetzt ist. Dieses ist zwischen jeweils einem fest mit dem Gehäuse (2) verbundenen ersten Anschlagelement (22) und einem zweiten Anschlagelement (11) mit Spiel gehalten. Die Steigung des Gewindes (16) ist so gross, dass das Verdrehen des Schraubenmutterelementes (17) beim Längsverschieben des Stangenelementes (10) ohne Selbstdämmung erfolgt. Das Schraubenmutterelement (17) ist während des Dämpfungsvorgangs mit dessen einen stirnseitigen Oberfläche (18) gegen die benachbarte Oberfläche (19) des zweiten Anschlagelementes (11) drückbar, die mit einem Reibelement (20) ausgestattet ist. Durch die entstehende Reibungskraft wird das Eindringen des Stangenelementes (10) in das Gehäuse (2) gedämpft.

## Beschreibung

Die vorliegende Erfindung bezieht sich auf ein Dämpfungselement für die Endlagendämpfung von bewegbaren Massen, insbesondere von Schrankauszügen, Schubladen und dergleichen von Möbelschränken, welches Dämpfungselement ein Gehäuse, ein Stangenelement, das in Längsachsenrichtung verschiebbar in diesem Gehäuse gehalten ist, und im Gehäuse untergebrachte Dämpfungsmittel umfasst, welche mit dem Stangenelement in Wirkverbindung sind.

Insbesondere bei Schrankauszügen von Möbelschränken, die im voll beladenen Zustand ein beachtliches Gewicht aufweisen können, ist es erforderlich, eine Endlagendämpfung vorzusehen, um zu vermeiden, dass diese Auszüge beim Ausziehen aus dem Möbelschrank oder beim Einschieben in den Möbelschrank starken Stossbelastungen ausgesetzt werden. Dadurch wird auch eine Lärm- und Schalldämmung erreicht, die in Räumen, wo diese Möbelschränke aufgestellt sind, andernfalls als störend empfunden werden können.

Derartige Dämpfungselemente sind bekannt. Hierbei sollen diese Dämpfungselemente sowohl geringe Massen, beispielsweise einen leeren Schrankauszug, aber auch grosse Massen, wenn beispielsweise dieser Schrankauszug voll beladen ist, in optimaler Weise dämpfen.

Die EP-A-0 841 451 zeigt beispielsweise ein Brems- und Dämpfungselement, bei welchem ein mit Luft gefüllter Kompressionsraum gebildet wird, mit welchem die dämpfende Wirkung erreicht wird. Hierbei weist der Kolben eine hohlzylindrische Form auf und ist aus einem elastischen Material gebildet, wodurch eine radiale Spreizung des Kolbens bei Zunahme des Drucks erreicht wird. Dadurch wird die Bremswirkung entsprechend angepasst. Um eine gute Wirkungsweise zu erhalten, müssen die entsprechenden Flächen sehr genau aufeinander abgestimmt sein, die Herstellung wird demzufolge aufwändig und teuer.

Es sind auch Dämpfungselemente bekannt, welche mit Flüssigkeit gefüllte Zylinderräume aufweisen, bei welchen die Dämpfung durch Verdrängen der Flüssigkeit über ein Ventilsystem erreicht wird, wie dies beispielsweise aus der EP-A-1 162 338 bekannt ist. Um eine optimale Dämpfung erreichen zu können, müssen auch hier die entsprechenden Flächen und Ventilsitze sehr genau bearbeitet sein, was auch hier den Aufwand zur Herstellung erhöht und entsprechend teuer macht.

Die Aufgabe der vorliegenden Erfindung besteht nun darin, ein Dämpfungselement für die Endlagendämpfung von bewegbaren Massen zu schaffen, das in optimaler Weise sowohl kleine wie auch grosse Massen entsprechend dämpft, und das einfach und kostengünstig hergestellt werden kann.

Erfindungsgemäss erfolgt die Lösung dieser Aufgabe dadurch, dass das Stangenelement mit Mitteln zur Sicherung gegen Verdrehung ausgestattet, im Gehäuse geführt und mit einem Gewinde versehen ist, auf welches ein Schraubenmutterelement aufgesetzt ist, das zwischen jeweils einem fest mit dem Gehäuse verbundenen ersten Anschlagelement und einem zweiten Anschlagelement mit Spiel gehalten ist, und die Steigung des Gewindes so gross ist, dass das Verdrehen des Schraubenmutterelementes beim Längsverschieben des Stangenelementes ohne Selbsthemmung erfolgt, und das Schraubenmutterelement während des Dämpfungsvorgangs mit dessen einen stirnseitigen Oberfläche gegen die benachbarte Oberfläche des zweiten Anschlagelementes drückbar ist.

Je nach der Kraft, die auf das Stangenelement wirkt, wird das Schraubenmutterelement mit dessen stirnseitiger Oberfläche stärker oder weniger stark gegen die benachbarte Oberfläche des zweiten Anschlagelementes gedrückt, wodurch eine grössere oder kleinere Reibung entsteht, und die Dämpfung des Dämpfungselementes somit grösser oder kleiner wird und sich selbständig auf die zu dämpfende Masse einstellt.

In vorteilhafter Weise ist das zweite Anschlagelement aus einem Plattenelement gebildet und mit einer im wesentlich zentral liegenden Durchgangsöffnung versehen, durch welche das Stangenelement hindurchgeführt ist. Dadurch liegen die beiden Reibflächen in optimaler Weise aufeinander.

Eine Verbesserung der Wirkung des Dämpfungselement wird dadurch erreicht, dass die eine stirnseitige Oberfläche des Schraubenmutterelementes und/oder die benachbarte Oberfläche des zweiten Anschlagelementes mit einem Reibelement ausgestattet sind.

Um den ersten Schlag der auf das Stangenelement des Dämpfungselement auftreffenden Masse zu dämpfen, ist es vorteilhaft, wenn das Reibelement an der Oberfläche des zweiten Anschlagelementes angebracht ist und aus einer elastischen Matte mit einer Dicke d gebildet ist. Dadurch wird erreicht, dass das Schraubenmutterelement zuerst in die elastische Matte eindringen kann und danach die Drehbewegung aufnehmen kann.

In vorteilhafter Weise ist die eine stirnseitige Oberfläche des Schraubenmutterelementes mindestens teilweise mit der Form eines Kugelstumpfes versehen, der sich gegen die benachbarte Oberfläche des zweiten Anschlagelementes hin verjüngt. Dadurch wird erreicht, dass die Reibungsfläche und demzufolge die Reibungskraft dann vergrössert wird, wenn der Kegelstumpf weiter in die elastische Matte eingedrückt wird, was bei grösserer Kraft der Fall ist und dadurch entsprechend die Dämpfungskraft zunimmt.

In vorteilhafter Weise ist das Gehäuse im wesentlichen aus einem U-Profil gebildet, dessen beide Stirnseiten mit Abdeckungen versehen sind, und sind an den beiden Schenkeln des U-Profils Laschen zur Befestigung angebracht, was einen einfachen Aufbau und eine einfache Befestigung des Dämpfungselementes ergibt.

Eine weitere vorteilhafte Ausgestaltung der Erfindung besteht darin, dass auf das mit der zu dämpfenden Masse in Kontakt kommende Ende des Stangenelementes eine aus einem elastischen Material gebildete Kappe aufgesetzt ist. Durch diese Kappe wird zusätzlich der erste Stoss der auftreffenden Masse gedämpft.

In vorteilhafter Weise sind die Mittel zur Sicherung gegen Verdrehung des Stangenelementes aus einem Vierkantblock gebildet, der auf dem Stangenelement fixiert ist, und dessen entsprechende Seitenflächen auf den Innenflächen des U-Profils in dessen Längsrichtung gleitbar abgestützt sind, wodurch auch diesbezüglich ein einfacher Aufbau erreicht wird.

Um in einfacher Weise zu erreichen, dass das Stangenelement nach einem Dämpfungsvorgang in die Ausgangslage zurückgebracht wird, ist das Dämpfungselement mit Federmitteln ausgestattet.

Ausführungsformen der vorliegenden Erfindung werden nachfolgend anhand der beiliegenden Zeichnung beispielhaft näher erläutert.

Es zeigt
Fig. 1 eine Seitenansicht im Schnitt einer ersten Ausführungsform des Dämpfungselementes;
Fig. 2 eine Ansicht von oben auf das Dämpfungselement gemäss Fig. 1, bei welchem sich das Stangenelement im eingefahrenen Zustand befindet;
Fig. 3 eine Schnittdarstellung entlang Linie III-III des Dämpfungselementes gemäss Fig. 2 ;
Fig. 4 eine Seitenansicht im Schnitt einer weiteren Ausführungsform eines erfindungsgemässen Dämpfungselementes;
Fig. 5 eine Ansicht von oben auf das Dämpfungselement gemäss Fig. 4, bei welchem sich das Stangenelement im eingefahrenen Zustand befindet; und
Fig. 6 eine vergrösserte Ansicht des Schraubenmutterelementes im eingedrückten Zustand auf die das Reibelement bildende elastische Matte.

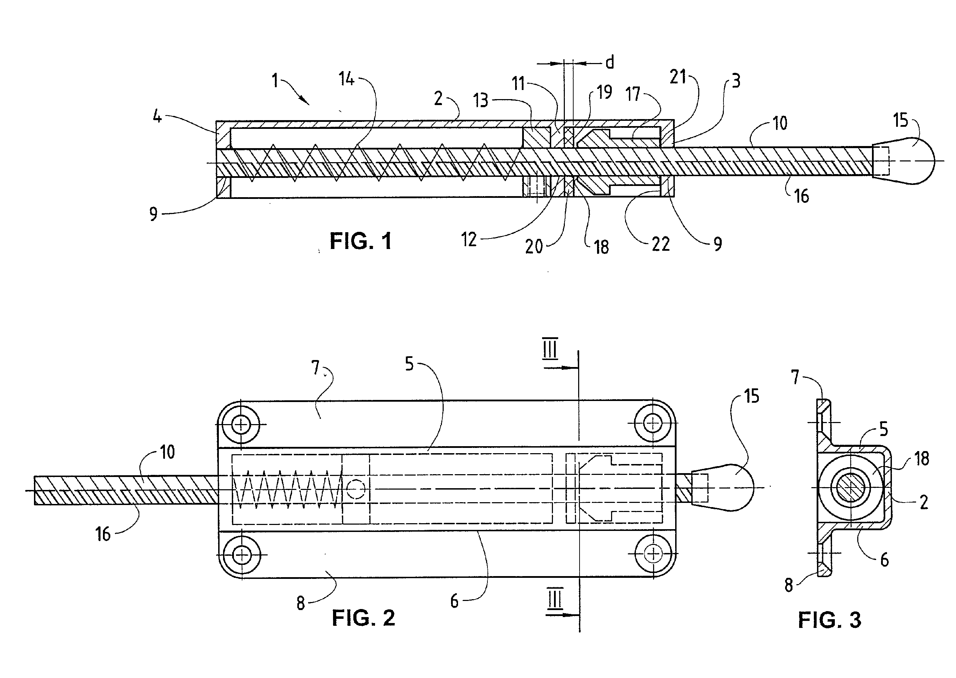

Wie aus den Fig. 1 bis 3 ersichtlich ist, besteht eine erste Ausführungsform eines erfindungsgemässen Dämpfungselementes 1 aus einem Gehäuse 2, das aus einem U-Profil gebildet ist, dessen beide Stirnseiten mit jeweils einer Abdeckung 3 bzw. 4 versehen sind. An den beiden Schenkeln 5 und 6 sind Laschen 7 und 8 angebracht, mit welchen das Dämpfungselement 1 beispielsweise im entsprechenden Möbelschrank durch Verschraubung befestigt werden kann. Selbstverständlich kann das Gehäuse auch durch ein anderes geeignetes Profil gebildet sein, beispielsweise durch ein Rohr.

Jeweils im zentralen Bereich der beiden Abdeckungen 3 und 4 sind Durchgangsöffnungen 9 angebracht. Durch diese Durchgangsöffnungen 9 hindurchgeführt ist ein Stangenelement 10. Dieses Stangenelement 10 ist in Längsachsenrichtung verschiebbar.

Im Gehäuse 2 des Dämpfungselementes 1 ist ein zweites Anschlagelement 11 angebracht, das die Form eines Plattenelementes aufweist. Auch dieses zweite Anschlagelement ist mit einer im wesentlichen zentral liegenden Durchgangsöffnung 12 versehen, durch welche das Stangenelement 10 ebenfalls hindurchgeführt ist.

Zwischen dem zweiten Anschlagelement 11 und der Abdeckung 4 ist auf dem Stangenelement 10 ein Vierkantblock 13 befestigt. Dieser Vierkantblock 13 dient einerseits als Mittel zur Sicherung gegen Verdrehung des Stangenelementes 10 bezüglich des Gehäuses, in dem die entsprechenden Seitenflächen auf den Innenflächen des U-Profils des Gehäuses 2 gleitbar abgestützt sind, andererseits dient dieser Vierkantblock 13 auch als Abstützung für eine Spiralfeder 14, die mit ihrem weiteren Ende auf der Abdeckung 4 abgestützt ist. Diese Spiralfeder 14 bewirkt, dass das Stangenelement 10 in die in Fig. 1 dargestellte Ausgangsposition gedrückt wird, das heisst, dass das Stangenelement 10 über die Abdeckung 3 vorstehend ist, und der Vierkantblock 13 sich auf dem zweiten Anschlagelement 11 abstützt. Das Ende des Stangenelementes 10, das über die Abdeckung 3 hinaus vorstehend ist, ist mit einer aus einem elastischen Material gebildeten Kappe 15 versehen, auf die die durch das Dämpfungselement 1 zu dämpfende Masse auffährt.

Das Stangenelement 10 ist mit einem Gewinde 16 versehen. Auf dieses Gewinde 16 aufgeschraubt ist ein Schraubenmutterelement 17, und zwar so, dass dieses Schraubenmutterelement 17 zwischen die Abdeckung 3 des Dämpfungselementes 1 und das zweite Anschlagelement 11 zu liegen kommt. Das Gewinde 16 weist eine so grosse Steigung auf, dass beim Längsverschieben des Stangenelementes 10 ein Verdrehen des Schraubenmutterelements 17 ohne Selbsthemmung erfolgt.

Die eine stirnseitige Oberfläche 18 des Schraubenmutterelementes 17 wird während eines Dämpfungsvorgangs gegen die benachbarte Oberfläche 19 des zweiten Anschlagelementes gedrückt. Hierzu ist diese benachbarte Oberfläche 19 mit einem Reibelement 20 versehen, das aus einer elastischen Matte mit einer Dicke d gebildet ist.

Wenn nun die zu dämpfende Masse auf die Kappe 15 und das Stangenelement 10 auffährt, wird dieses Stangenelement 10 in Längsrichtung gegen das Gehäuse 2 verschoben (in Fig. 1 nach links). Die eine stirnseitige Oberfläche des Schraubenmutterelementes 17 wird dann gegen die das Reibelement 20 bildende elastische Matte gedrückt. Das Schraubenmutterelement 17 beginnt sich wegen dem Steilgewinde zu drehen, wobei die Drehung durch das Reibelement 20 abgebremst wird, wodurch eine Verzögerung der Längsbewegung des Stangenelementes 10 eintritt, und die Masse abgebremst wird. Je geringer die auf das Stangenelement 10 wirkende Kraft ist, desto geringer wird die Reibungskraft zwischen der einen stirnseitigen Oberfläche 18 des Schraubenmutterelementes 17 und dem Reibelement 20, das Erreichen der Endlage, wie dies in Fig. 2 dargestellt ist, wird somit in optimaler Weise erreicht, ob nun die abzubremsende Masse gross oder klein ist.

Wenn die Last vom Dämpfungselement 1 mit voll eingefahrenem Stangenelement 10, wie dies in Fig. 2 dargestellt ist, weggenommen wird, bewirkt die Spiralfeder 14, dass das Stangenelement 10 in die Ausgangsstellung gemäss Fig. 1 zurückgefahren wird. Durch das Vorschieben des Stangenelementes 10 wird die eine stirnseitige Oberfläche 18 des Schraubenmutterelementes 17 vom Reibelement 20 abgehoben. Die andere stirnseitige Oberfläche 21 des Schraubenmutterelementes 17 stützt sich dann auf der Innenfläche der Abdeckung 3 ab, welche Abdeckung 3 somit als erstes Anschlagelement 22 dient. Da zwischen der anderen stirnseitigen Oberfläche 21 und der Oberfläche des ersten Anschlagelementes 22 die Reibung möglichst klein gehalten wird, dreht sich das Schraubenmutterelement 17 sehr leicht, das Stangenelement 10 verschiebt sich in die Ausgangslage gemäss Fig. 1 und ist für einen weiteren Dämpfungsvorgang bereit.

Eine optimale Wirkungsweise wurde beispielsweise mit einem erfindungsgemässen Dämpfungselement 1 erreicht, bei welchem das Stangenelement 10 einen Durchmesser von 5 mm aufweist, die Steigung des Gewindes 16 etwa 20 mm beträgt, und das Reibelement 20 aus einem Polyurethanschaum mit geschlossenen Poren und einer Dichte von 35 kg pro Kubikmeter gebildet ist, wobei die Dicke d zirka 4 mm beträgt. Das Material gilt als abriebfest.

Die eine stirnseitige Oberfläche 18 des Schraubenmutterelementes 17 kann, wie dies in den Figuren dargestellt ist, teilweise die Form eines Kegelstumpfes aufweisen, der sich gegen die benachbarte Oberfläche 19 des zweiten Anschlagelementes 11 hin verjüngt. Hierbei ist die Neigung dieser Fläche bezüglich der Längsachse des Stangenelementes 10 um 45° geneigt. Mit dieser Neigung kann erreicht werden, dass die stirnseitige Oberfläche 18 des Schraubenmutterelementes 17 tiefer in das Reibelement 10 eindringen kann und die Dämpfungswirkung verbessert werden kann.

Die erste Schlagdämpfung der auf das Dämpfungselement 1 auftreffenden Masse erfolgt einerseits durch die elastische Kappe 15, andererseits auch durch das Eindringen des Schraubenmutterelementes 17 in die das Reibelement 20 bildende elastische Matte.

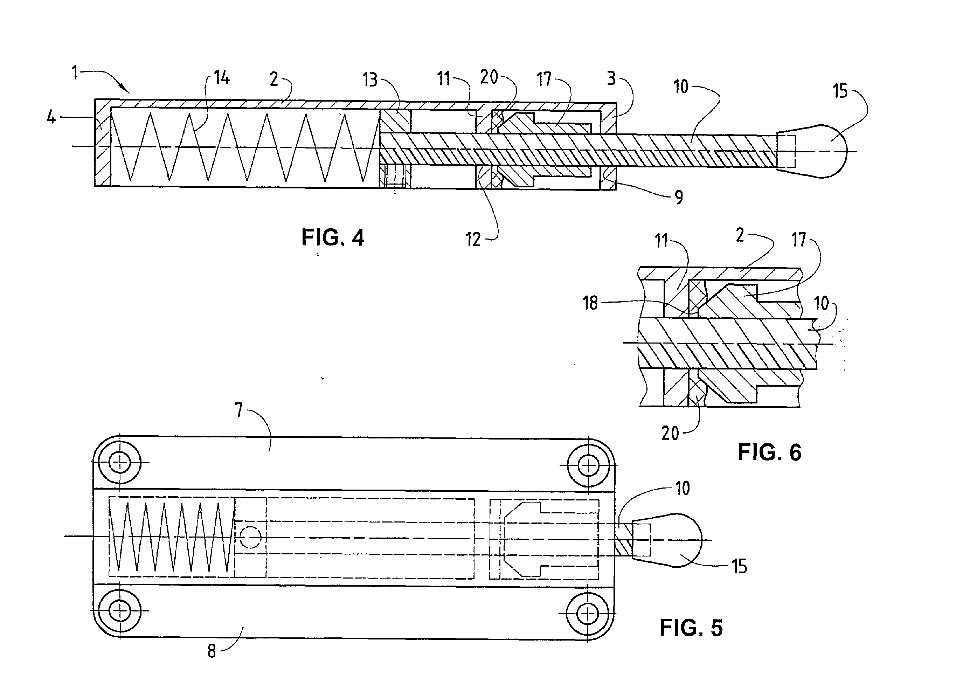

Das in den Fig. 4 bis 6 dargestellte Ausführungsbeispiel eines erfindungsgemässen Dämpfungselementes unterscheidet sich zur ersten Ausführungsform nur dadurch, dass das Stangenelement 10 nicht durchgehend ausgeführt ist, und demzufolge im Bereich des Vierkantblocks 13 endet. Die hintere Abdeckung 4 weist somit keine Durchgangsöffnung für das Stangenelement 10 auf. Das Stangenelement 10 wird geführt durch die Durchgangsöffnung 9 in der vorderen Abdeckung 3, die Durchgangsöffnung 12 im zweiten Anschlagelement 11 und durch den Vierkantblock 13. Die Spiralfeder 14 kann einen solchen Durchmesser aufweisen, dass sie durch die Innenflächen des Gehäuses 2 geführt ist.

Aus Fig. 4 und insbesondere aus Fig. 6 ist das Eindringen des Schraubenmutterelementes 17 in das Reibelement 20, das durch eine elastische Matte gebildet ist, ersichtlich, wie dies während eines Dämpfungsvorgangs eintritt und wie dies auch zum vorgängigen Ausführungsbeispiel beschrieben worden ist. Dies zeigt, wie durch die Wahl der stirnseitigen Oberfläche 18 des Schraubenmutterelementes 17 und der Neigung des Kegelstumpfes das Eindringverhalten in das Reibelement 20 geändert werden kann, was das Reibverhalten und demzufolge das Dämpfungsverhalten des Dämpfungselementes beeinflusst.

Einen wesentlichen Einfluss auf das Dämpfungsverhalten des Dämpfungselements hat bei diesen Ausführungsbeispielen insbesondere die Härte der das Reibelement 20 bildenden elastischen Matte. Bei weicherem Material dringt der Kegelstumpf der stirnseitigen Oberfläche 18 des Schraubenmutterelementes 17 beim Dämpfungsvorgang tief in diese elastische Matte ein, die wirksame Berührungsfläche wird gross, die Reibungskräfte und somit die Dämpfungskraft sind demzufolge gross. Bei härterem Material ist die Eindringtiefe des Kegelstumpfes geringer, entsprechend werden die Reibungskräfte und somit die Dämpfungskraft kleiner.

Bei beiden vorgängig beschriebenen Ausführungsbeispielen muss die Spiralfeder 14 jeweils nur eine solche Federkraft aufweisen, dass das Stangenelement 10 wieder zurück in die Ausgangsposition gedrückt wird. Dies bedeutet, dass die Kraft der Spiralfeder 14 gering sein kann, sie hat demzufolge praktisch keinen Einfluss auf das Dämpfungsverhalten des Dämpfungselementes 1.

Die Materialien, aus denen das erfindungsgemässe Dämpfungselement 1 hergestellt werden kann, können aus geeignetem Kunststoff und/oder Metall gebildet sein, je nach Einsatzbereich des Dämpfungselementes oder deren Belastung. Die das Reibelement 20 bildende elastische Matte kann auch aus einem anderem geeigneten Material bestehen, als vorgängig angegeben worden ist.

Es wäre auch denkbar, das Dämpfungselement als doppelt wirkendes Dämpfungselement auszubilden. Hierbei könnte im Ausführungsbeispiel gemäss Fig. 1 bis 3 das Schraubenmutterelement 17 im mittleren Bereich des Gehäuses 2 untergebracht werden, begrenzt durch zwei Anschlagelemente, die dem zweiten Anschlagelement 11 entsprechen. Das Schraubenmutterelement könnte symmetrisch ausgebildet sein, auf den beidseitig angebrachten Anschlagelementen könnte jeweils ein Reibelement, bestehend aus einer elastischen Matte, angebracht werden. Um das Stangenelement in die Mittelstellung, das heisst in die Ausgangsposition, zu bringen, könnte beidseits eine Druckfeder eingesetzt werden.

Dieses Dämpfungselement lässt sich nicht nur in Möbelschränken zum Abbremsen von Schrankauszügen, Schubladen und dergleichen einsetzen, sie können überall dort eingesetzt werden, wo eine Endlagendämpfung von Massen gewünscht wird.

## Patentansprüche

1. Dämpfungselement für die Endlagendämpfung von bewegbaren Massen, insbesondere von Schrankauszügen, Schubladen und dgl. von Möbelschränken, welches Dämpfungselement (1) ein Gehäuse (2), ein Stangenelement (10), das in Längsachsenrichtung verschiebbar in diesem Gehäuse (2) gehalten ist, und im Gehäuse (2) untergebrachte Dämpfungsmittel umfasst, welche mit dem Stangenelement (10) in Wirkverbindung sind, **dadurch gekennzeichnet, dass** das Stangenelement (10) mit Mitteln (13) zur Sicherung gegen Verdrehung ausgestattet, im Gehäuse (2) geführt und mit einem Gewinde (16) versehen ist, auf welches ein Schraubenmutterelement (17) aufgesetzt ist, das zwischen jeweils einem fest mit dem Gehäuse (2) verbundenen ersten Anschlagelement (22) und einem zweiten Anschlagelement (11) mit Spiel gehalten ist, und die Steigung des Gewindes (16) so gross ist, dass das Verdrehen des Schraubenmutterelements (17) beim Längsverschieben des Stangenelements (10) ohne Selbsthemmung erfolgt, und das Schraubenmutterelement (17) während des Dämpfungsvorgangs mit dessen einen stirnseitigen Oberfläche (18) gegen die benachbarte Oberfläche (19) des zweiten Anschlagelementes (11) drückbar ist und das Verdrehen des Schraubenmutterelementes durch Reibung abgebremst ist.

2. Dämpfungselement nach Anspruch 1, **dadurch gekennzeichnet, dass** das zweite Anschlagelement (11) aus einem Plattenelement gebildet ist und mit einer im wesentlichen zentral liegenden Durchgangsöffnung (12) versehen ist, durch welche das Stangenelement (10) hindurch geführt ist.

3. Dämpfungselement nach Anspruch 1 oder 2, **dadurch gekennzeichnet, dass** die eine stirnseitige Oberfläche (18) des Schraubenmutterelements (7) und/oder die benachbarte Oberfläche (19) des zweiten Anschlagelementes (11) mit einem Reibelement (20) ausgestattet sind.

4. Dämpfungselement nach Anspruch 3, dass das Reibelement (20) an der Oberfläche des zweiten Anschlagelementes (11) angebracht ist und aus einer elastischen Matte mit einer Dicke (d) gebildet ist.

5. Dämpfungselement nach einem der Ansprüche 1 bis 4, **dadurch gekennzeichnet, dass** die eine stirnseitige Oberfläche (18) des Schraubmutterelements (17) mindestens teilweise die Form eines Kegelstumpfes aufweist, der sich gegen die benachbarte Oberfläche (19) des zweiten Anschlagelementes (11) hin verjüngt.

6. Dämpfungselement nach einem der Ansprüche 1 bis 5, **dadurch gekennzeichnet, dass** das Gehäuse (2) im wesentliche aus einem U-Profil gebildet ist, dessen beide Stirnseiten mit Abdeckungen (3, 4) versehen sind, und dass an den beiden Schenkeln (5, 6) des U-Profils Laschen (7, 8) zur Befestigung angebracht sind.

7. Dämpfungselement nach einem der Ansprüche 1 bis 6, **dadurch gekennzeichnet, dass** auf das mit der zu dämpfenden Masse in Kontakt kommende Ende des Stangenelements (10) eine aus einem elastischen Material gebildete Kappe (15) aufgesetzt ist.

8. Dämpfungselement nach einem der Ansprüche 6 oder 7, **dadurch gekennzeichnet, dass** die Mittel zur Sicherung gegen Verdrehung aus einem Vierkantblock (13) gebildet sind, der auf dem Stangenelement (10) fixiert ist, und dessen entsprechende Seitenflächen auf den Innenflächen des U-Profils in dessen Längsrichtung gleitbar abgestützt sind.

9. Dämpfungselement nach einem der Ansprüche 1 bis 8, **dadurch gekennzeichnet, dass** dieses mit Federmitteln (14) ausgestattet ist, welche das Stangenelement (10) nach einem Dämpfungsvorgang in die Ausgangslage zurück bringen.
